# FASCICULE DE BREVET EUROPEEN

(11) **EP 3 469 267 B1**
(45) Date de publication et mention de la délivrance du brevet: **09.08.2023**
(21) Numéro de dépôt: 17728231.6
(22) Date de dépôt: 09.06.2017
(51) Int. Cl.: F24F 1/0022, F24F 1/005, F24F 3/14, F24F 7/06, F24F 7/08, F24F 13/08, F24F 12/00, F04D 29/42, F24F 5/00, F24F 7/10

(54) **MODULE DE VENTILATION POUR UNE TOUR D'AÉRO-RÉFRIGÉRATION INTÉGRANT UNE ROUE LIBRE D'ASPIRATION D'AIR EXTÉRIEUR ET DE REFOULEMENT D'AIR**
BELÜFTUNGSMODUL FÜR EINEN LUFT-KÜHLUNGSTURM MIT EINEM FREILAUFRAD FÜR AUSSENLUFTABSAUGUNG UND LUFTASUTRÖMER
VENTILATION MODULE FOR AN AIR-REFRIGERATION TOWER COMPRISING A FREE WHEEL FOR EXTERNAL AIR SUCTION AND AIR BLOWING

(30) Priorité: 10.06.2016 FR 1655374
(43) Date de publication de la demande: 17.04.2019
(73) Titulaire: Société JACIR (SA), 77340 Pontault-Combault (FR)
(72) Inventeur: BOUTRY, François-Xavier, 06220 Vallauris (FR)
(74) Mandataire: Decobert, Jean-Pascal
(86) Numéro de dépôt international: PCT/EP2017/064187
(87) Numéro de publication internationale: WO 2017/212050

(56) Documents cités:
- JP-A- H07 293 951
- US-A- 2 218 330
- US-A- 2 775 310
- US-A- 3 442 494

## Description

### DOMAINE TECHNIQUE DE L'INVENTION

L'invention concerne une tour d'aéro-réfrigération munie d'un module de ventilation associé à un module mixte et un module sec pour le passage de l'air.

### ÉTAT DE LA TECHNIQUE

Selon l'état de la technique, il est connu d'utiliser une roue libre en association avec un module de ventilation pour l'aspiration d'air extérieur et le refoulement de l'air vers les modules supérieurs que sont le module humide puis le module sec.

Un tel état de la technique est connu du document US2005/0056042.

Par l'appellation roue libre, il est entendu un groupe moto-ventilateur fixé sur une platine. Ce groupe moto-ventilateur peut être logé dans un carter le plus souvent rectangulaire.

La roue libre aspire l'air d'un côté dit amont, met l'air sous pression et le refoule sur un côté dit aval vers des modules. Il faut donc prévoir selon l'état de la technique de la place sur deux côtés opposés de la roule libre pour respectivement un ou des passages d'aspiration d'air extérieur et un ou des passages de refoulement.

De plus, une telle roue libre est fréquemment disposée à l'extérieur du module de ventilation en étant disposée dans un carter, ce qui accroît son encombrement.

Un tel positionnement extérieur de la roue libre la soumet aux intempéries et n'effectue presque aucune atténuation de son bruit en fonctionnement, ce bruit étant seulement limité par la présence du carter de roue libre.

On connaît par ailleurs la publication brevet JPH 07293951 relative à une tour d'aéro-réfrigération. On connait aussi du document brevet US2775310 une tour de refroidissement présentant un système de ventilation. Le document US 3442494 divulgue une tour d'évaporation présentant également un système de ventilation.

Un objet de la présente invention est donc de proposer un module de ventilation avec une aspiration et un refoulement d'air plus efficace et moins encombrant avec, le cas échéant, une roue libre plus efficacement protégée des sollicitations extérieures que dans l'état de la technique.

Un autre objet de la présente invention est de proposer un module de ventilation et une tour d'aéro-réfrigération avec une circulation d'air interne optimisée, et une orientation des flux d'air interne.

### RÉSUMÉ DE L'INVENTION

A cet effet, la présente invention concerne une tour d'aéro-réfrigération selon la revendication 1.

En effet l'air extérieur traverse dans un premier temps le passage d'aspiration dans lequel l'air est à une première pression. En aval de la roue libre, au contraire, le flux d'air est à une deuxième pression supérieure à la première. L'air est donc véhiculé sous pression vers le reste de l'installation.

Une telle roue libre dans un module de ventilation permet une aspiration et un refoulement d'un même côté de la roue libre, ce qui permet une alimentation et une évacuation de l'air s'étendant sensiblement parallèlement et économise de la place dans le module de ventilation. La roue libre met l'air aspiré sous pression qui s'évacue ensuite vers un module mixte de la tour d'aéro-réfrigération par le ou les passages de refoulement. Alors que dans l'état de la technique, le dispositif humide est un ensemble unitaire, l'invention combat ce préjugé et procure un fonctionnement mixte à un étage, dit module mixte, dont seule une partie est dédiée au dispositif à fonction humide.

Le refoulement et l'aspiration se font dans des directions différentes et il n'y a pas interférence des flux de refoulement et d'aspiration, la roue libre aspirant l'air extérieur suivant la direction de l'axe de rotation de ladite roue libre et refoulant l'air dans le même axe, et optionnellement en dérivation radialement à l'axe de rotation de ladite roue libre.

Notamment dans le cas particulier pour lequel il y a un passage en dérivation associé à la roue libre, une tour selon l'invention permet un meilleur guidage de l'air du module de ventilation vers le module mixte, le module mixte pouvant comporter deux enceintes distinctes dont une d'humidification de l'air et l'autre permettant le passage d'un flux d'air refoulé tout en le conservant en l'état.

L'invention concerne aussi un procédé d'aspiration et de refoulement d'air dans un module de ventilation d'une telle tour d'aéro-réfrigération, dans lequel l'aspiration et le refoulement de l'air se font d'un même côté de la roue libre en étant séparés l'un de l'autre, la pression de l'air extérieur étant augmentée lors de l'aspiration par une entrée d'air latérale dans le passage d'aspiration. La mise en pression se fait dans un passage d'aspiration par admission latérale d'air supplémentaire en plus de l'air pénétrant par une embouchure du passage d'aspiration, cet air supplémentaire passant en dessous d'un passage de refoulement.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la figure 1 est une représentation schématique d'une vue en perspective d'un mode de réalisation d'une tour d'aéro-réfrigération selon la présente invention avec notamment un module de ventilation,
- la figure 2 est une représentation schématique d'une vue de dessus en perspective d'un mode de réalisation d'un module de ventilation faisant partie d'une tour d'aéro-réfrigération selon la présente invention,
- la figure 3 est une représentation schématique d'une vue en perspective d'un mode de réalisation d'une tour d'aéro-réfrigération selon la présente invention, la tour d'aéro-réfrigération fonctionnant selon un mode sec,
- la figure 4 est une représentation schématique d'une vue de dessus en perspective d'un mode de réalisation d'un module de ventilation faisant partie d'une tour d'aéro-réfrigération selon la présente invention, la tour d'aéro-réfrigération fonctionnant en mode sec,
- la figure 5 est une représentation schématique d'une vue en perspective d'un mode de réalisation d'une tour d'aéro-réfrigération selon la présente invention, la tour d'aéro-réfrigération fonctionnant selon un mode humide,
- la figure 6 est une représentation schématique d'une vue de dessus en perspective d'un mode de réalisation d'un module de ventilation faisant partie d'une tour d'aéro-réfrigération selon la présente invention, la tour d'aéro-réfrigération fonctionnant en mode humide,
- les figures 7 et 8 sont des représentations schématiques d'une vue en perspective sous deux angles de vue différents d'un mode de réalisation d'un module de ventilation pour une tour d'aéro-réfrigération selon la présente invention doté de deux compartiments pour roue libre.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

Dans ce qui va suivre, il est fait référence à toutes les figures prises en combinaison. Quand il est fait référence à une ou des figures spécifiques, les autres figures sont à prendre en combinaison avec ces figures spécifiques pour la reconnaissance des références numériques désignées non présentes sur ces figures spécifiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement avec la tour d'aéro-réfrigération selon l'invention:
- le module de ventilation comporte au moins un passage de refoulement configuré pour orienter l'air dans une direction perpendiculaire la direction de l'axe de rotation de ladite roue libre.
- le module de ventilation intègre en son intérieur la roue libre. Contrairement à la plupart des modules de ventilation connus de l'état de la technique pour lesquels un ventilateur est extérieur au module, dans la présente invention, la roue libre est intégrée à l'intérieur du module de ventilation. La roue libre est ainsi mieux protégée des intempéries tandis que le bruit de son fonctionnement sera atténué par le au moins un passage d'aspiration, réduisant les nuisances sonores. Le module de ventilation est aussi plus compact en étant d'un encombrement plus réduit.
- le module de ventilation est traversé par au moins un passage d'aspiration d'air extérieur et par au moins deux passages de refoulement d'air symétriques de part et d'autre du passage d'aspiration suivant un plan, ce plan étant de préférence vertical et avantageusement contenant l'axe de rotation de la roue libre, lesdits au moins un passage d'aspiration et de refoulement s'étendent sensiblement parallèles l'un à l'autre en étant cloisonnés l'un par rapport à l'autre. Enfin, l'air extérieur passe dans un passage cloisonné, avec avantageusement une configuration mettant l'air extérieur en dépression. L'air légèrement en dépression va passer par la roue libre et être refoulé vers le haut sans que l'air refoulé et l'air aspiré ne soient en contact. Le cloisonnement des passages d'aspiration et de refoulement permet aussi de mieux diriger les flux d'air vers la roue libre pour le flux d'air aspiré et dans le même axe ou optionnellement en dérivation vers le haut du module de ventilation et un module mixte destiné à être superposé au module de ventilation pour le flux d'air refoulé.
- ledit au moins un passage d'aspiration communique avec la roue libre, sur la face avant de ladite roue libre.
- la circulation d'air se faisant avec une composante de vitesse selon l'axe de rotation de la roue libre en sens inverse dans un passage de refoulement par rapport à la circulation d'air dans un passage d'aspiration d'air.
- il est prévu au moins trois passages de refoulement, deux passages de refoulement intercalant un passage d'aspiration d'air entre eux.
- ledit au moins un passage de refoulement présente un fond avec au moins une partie du fond sous forme d'une pente présentant une inclinaison non nulle, notamment de 3% à 30%, et/ou préférentiellement inférieure ou égale à 5%, avec de préférence deux surfaces verticales de part et d'autre de ladite pente (18), ledit au moins un passage de refoulement débouchant en partie supérieure du module de ventilation. La pente permet d'écouler l'eau vers le bassin et de diriger l'air de refoulement vers le haut du module de ventilation, donc en direction d'un module mixte superposé au module de ventilation.
- avantageusement, la dimension du passage d'aspiration, suivant la direction de l'axe de rotation de la roue libre, est comprise entre 30% et 85 %, et de préférence entre 60% et 70%, plus particulièrement de 66%, de la dimension totale du module suivant cette direction.
- ledit au moins un passage d'aspiration présente au moins une grille latérale disposée en dessous de la pente dudit au moins un passage de refoulement. Cette grille permet l'introduction latérale d'air extérieur n'ayant pas pénétré par l'embouchure du ou de chaque passage d'aspiration mais se trouvant sous le passage de refoulement. Cette grille présente l'avantage de constituer une prise d'air supplémentaire, augmentant la surface de prise d'air et diminuant la vitesse frontale de l'air à l'aspiration du module de ventilation.
- ledit au moins un passage d'aspiration présente un fond s'étendant sensiblement horizontalement quand le module de ventilation est en position verticale et ledit au moins un passage d'aspiration présente deux cloisons latérales sensiblement verticales, un toit fermant le passage d'aspiration sur la face supérieure du passage d'aspiration. Chaque passage d'aspiration est ainsi cloisonné. La position verticale du module de ventilation correspond à un ou des passages d'aspiration s'étendant sensiblement horizontalement dans le module de ventilation.
- le toit est pentu en présentant deux faces inclinées vers une cloison latérale respective. La déclivité du toit peut permettre à l'eau tombant du module mixte destiné à se trouver dans une forme de réalisation au-dessus du dispositif de ventilation de s'écouler vers le bas du module de ventilation.
- le module est un parallélépipède rectangle présentant une longueur et une largeur, lesdits au moins un passage d'aspiration et de refoulement s'étendant dans la largeur du module de ventilation, ladite au moins une roue libre étant positionnée vers un bord longitudinal du module.
- ladite au moins une roue libre est logée dans un compartiment, ledit au moins un passage d'aspiration débouchant dans le compartiment et ledit au moins un passage de refoulement partant du compartiment.
- le compartiment présente un plafond percé et muni d'au moins un élément d'obturation pour au moins un passage en dérivation dudit au moins un passage de refoulement.
- ledit au moins un élément d'obturation du compartiment est mobile en position pour ouvrir ou fermer le passage en dérivation. Ceci permet de régler le flux de dérivation destiné au module mixte ce flux de dérivation ne passant avantageusement pas par au moins un dispositif d'humidification intégré dans le module mixte
- ledit au moins un élément d'obturation est réglable dans des positions intermédiaires à une ouverture ou fermeture complète.
- le module présente un bassin incliné collecteur d'eau disposé sous la roue libre, le bassin étant incliné pour évacuer l'eau à l'extérieur du module de ventilation.
- le module mixte comprend une première enceinte présentant au moins un dispositif d'humidification de l'air le traversant et une deuxième enceinte en dérivation reliant le module de ventilation au module sec avec une circulation d'air sans humidification du module de ventilation au module sec, la deuxième enceinte se trouvant au-dessus d'un compartiment logeant la roue libre avec un plafond percé d'au moins un élément d'obturation.
- pour le procédé, l'air refoulé par le module de ventilation traverse le module mixte en passant par le dispositif d'humidification d'air et le passage en dérivation sans traitement d'humidification pour pénétrer dans le module sec.

On entend par à l'avant du plan formé par la face avant de ladite roue libre, l'espace compris entre l'ouverture des passages d'aspiration et le plan formé par la face avant de ladite roue libre.

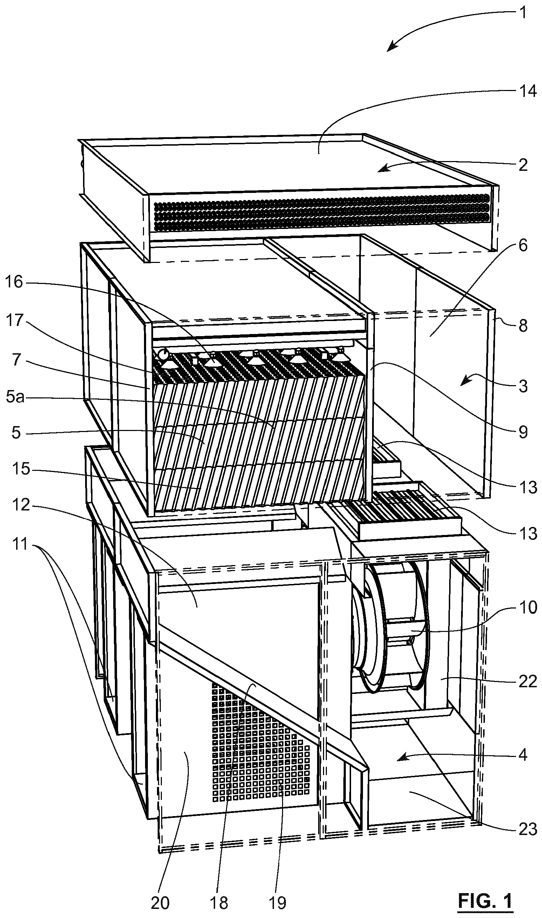

En se référant notamment à la figure 1, la présente invention concerne une tour d'aéro-réfrigération 1. Une telle tour d'aéro-réfrigération 1 comprend un module de ventilation 4, un module mixte 3 et un module sec 2. Le module mixte 3 est superposé au module de ventilation 4 et le module sec 2 est superposé au module mixte 3 en formant une tour verticale.

Comme il peut être vu notamment aux figures 1, 3 et 5, le module sec 2 peut comprendre une batterie sèche 14. Cette batterie sèche 14 peut être une batterie à ailettes reprenant sensiblement les dimensions d'au moins un dispositif d'humidification intégré dans le module mixte 3.

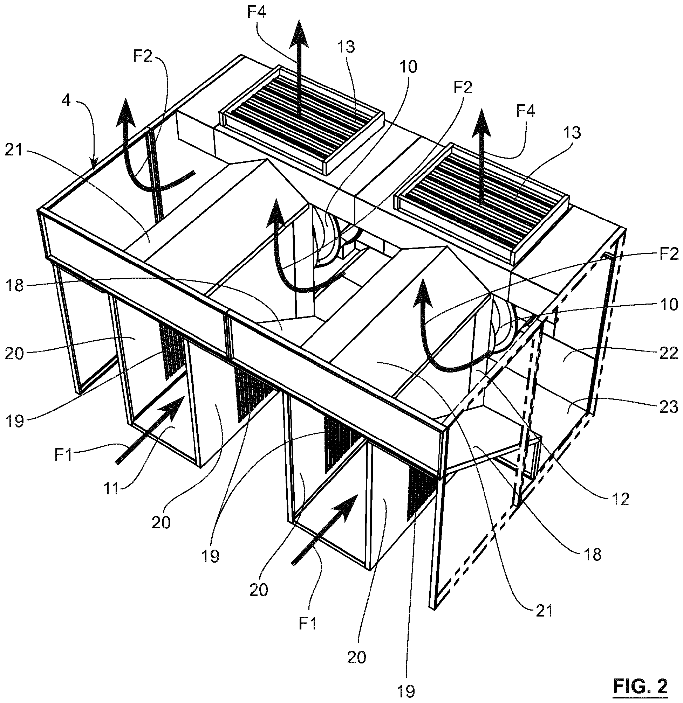

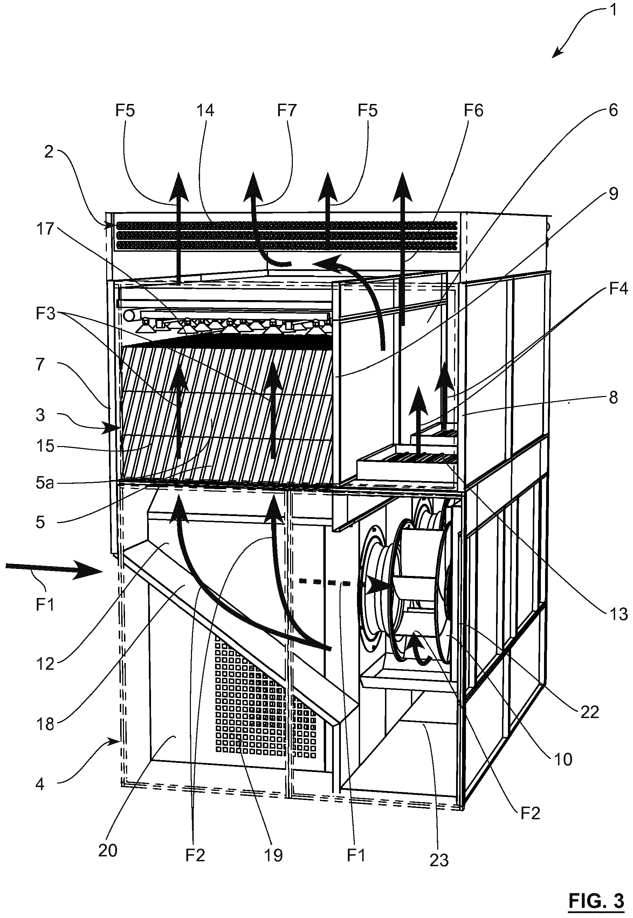

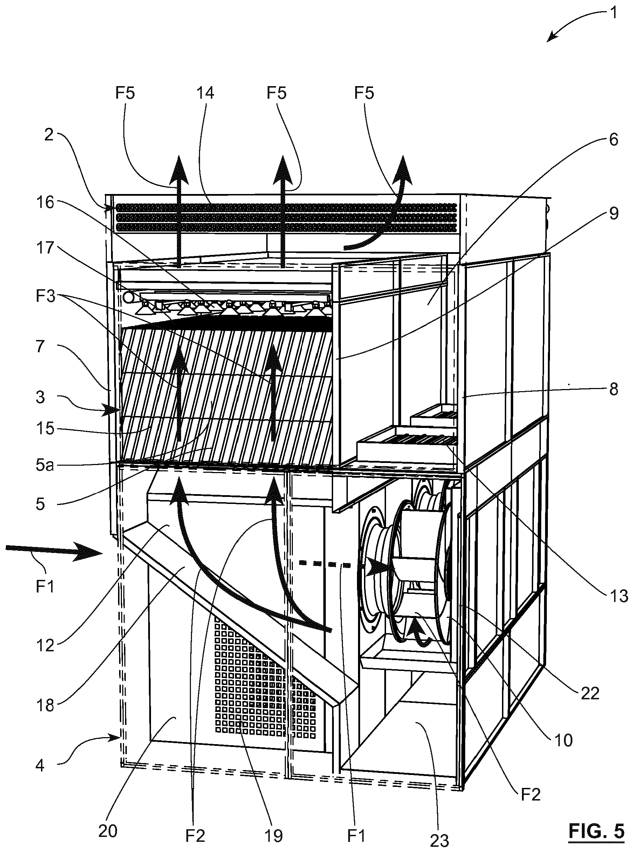

Aux figures 3 et 5, il est visible plusieurs flèches relatives à des flux d'air. A ces figures, la flèche F1 symbolise le flux d'air extérieur aspiré dans le module de ventilation 4. La flèche F2 symbolise le flux d'air refoulé par la roue libre 10 tournant selon la flèche Fr. La flèche F3 indique le flux d'air ayant quitté le module de ventilation 4 par ledit au moins un passage de refoulement référencé 12 à la figure 2 et traversant ledit au moins un dispositif d'humidification 5 du module mixte 3.

La flèche F4 indique le flux d'air dans le passage en dérivation 6 de l'air ayant quitté le module de ventilation et ne passant pas par ledit au moins un dispositif d'humidification 5. La flèche F5 indique le flux d'air passant du module mixte 3 au module sec 2, cet air pouvant être le flux d'air passant par ledit au moins un dispositif d'humidification 5.

La flèche F6 indique le premier flux d'air ayant été conduit par le passage en dérivation 6 dudit au moins un dispositif d'humidification et passant dans le module sec 2 et la flèche F7 indique le deuxième flux d'air ayant été conduit par le passage en dérivation 6 dudit au moins un dispositif d'humidification et passant dans le module sec 2, ceci en étant introduit entre le module mixte 3 et le module sec 2 afin que l'air en dérivation se répartisse sur la plus grande surface possible de la batterie sèche du module sec 2, cette flèche F7 n'étant montré qu'à la figure 3 pour un mode de fonctionnement sec de la tour d'aéro-réfrigération 1.

Ledit au moins un dispositif d'humidification intégré dans le module mixte 3 peut comprendre successivement superposés vers le module sec 2 une batterie arrosée 15, un appareil de pulvérisation 16 et un séparateur de gouttes 17.

Pour une tour 1 s'étendant verticalement, le module de ventilation 4 peut comprendre une roue libre 10 d'aspiration d'air extérieur et de refoulement de l'air en partie supérieure du module de ventilation 4, partie supérieure qui est adjacente au module mixte 3.

Selon la présente invention, la roue libre 10 aspire de l'air extérieur suivant la direction de l'axe de rotation de ladite roue libre 10 et refoule l'air radialement à l'axe de rotation de ladite roue libre 10. Le module de ventilation 4 est traversé par au moins un passage de refoulement 12 d'air, ledit au moins un passage de refoulement 12 d'air étant configuré pour orienter le flux d'air suivant au moins une direction autre que la direction de l'axe de rotation de ladite roue libre 10.

Ceci peut être vu notamment à la figure 2. Ledit au moins un passage d'aspiration 11, à la figure 2 deux passages d'aspiration, débouche sur une roue libre 10. Il y a avantageusement une roue libre 10 pour chaque passage d'aspiration 11.

Dans le mode de réalisation non limitatif de la figure 2, il peut être prévu au moins deux passages d'aspiration 11 d'air. Dans ce cas, au moins un passage de refoulement 12 peut être intercalé entre les deux passages d'aspiration 11 d'air, la circulation de l'air se faisant en sens inverse dans un passage de refoulement 12 par rapport à la circulation de l'air dans un passage d'aspiration 11 d'air. D'une manière générale, il est préférable d'avoir deux passages de refoulement 12 symétriques entourant un passage d'aspiration 11.

Toujours dans le mode de réalisation non limitatif de la figure 2, il peut être prévu au moins trois passages de refoulement 12, deux passages de refoulement 12 intercalant un passage d'aspiration 11 d'air entre eux.

Le ou les passages de refoulement 12 sont à orienter vers le module mixte 3 qui se trouve au-dessus du module de ventilation 4. Pour cela le ou les passages de refoulement 12 peuvent présenter un fond avec au moins une partie du fond sous forme d'une pente 18 orientée vers le haut du module 4 afin de diriger l'air de refoulement vers une partie supérieure du module de ventilation 4. La partie sensiblement horizontale du fond est proche de la roue libre 10, la pente 18 succédant à cette partie et la terminant vers une face supérieure du module de ventilation 4 destinée à être adjacente au module mixte 3.

Le module de ventilation 4 peut être traversé par au moins un passage d'aspiration 11 d'air extérieur et par au moins un passage de refoulement 12 d'air. Lesdits au moins un passage d'aspiration 11 et de refoulement s'étendent alors sensiblement parallèles l'un à l'autre en étant cloisonnés l'un par rapport à l'autre.

La présence de la pente 18 dégage une portion du côté latéral du ou de chaque passage d'aspiration 11. Il est possible de munir cette portion du côté latéral du passage d'aspiration 11 d'au moins une grille 19 disposée en dessous de la pente 18 du passage de refoulement 12 associé.

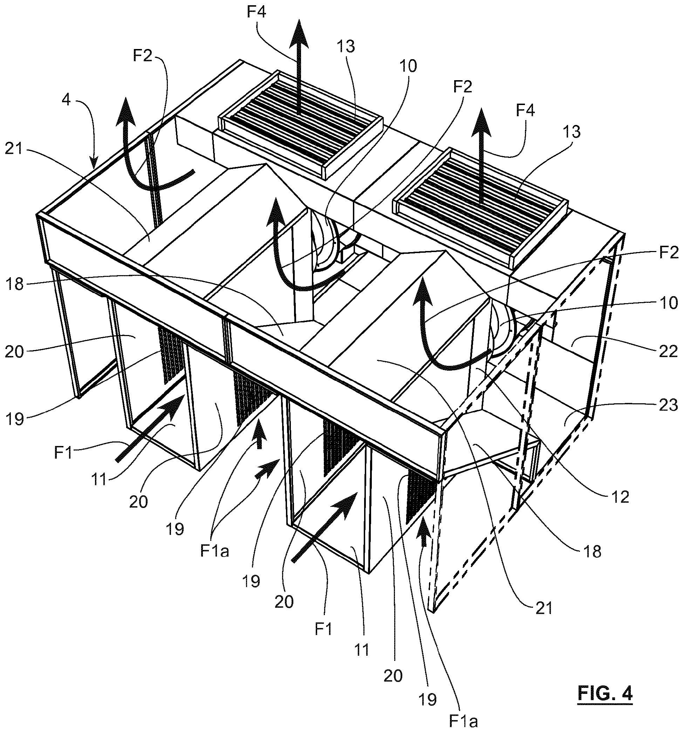

En effet, comme il est notamment visible à la figure 4, de l'air extérieur, symbolisé par la flèche F1a montrant un flux aspiré latéral pénètre sous la pente 18 et ne pourrait pas rejoindre la roue libre 10 car étant enfermé en dessous de la pente 18. La présence d'au moins une grille 19 permet la réintroduction de cet air dans un passage d'aspiration 11 adjacent.

En ce qui concerne le ou chaque passage d'aspiration 11, ce passage présente un fond s'étendant sensiblement horizontalement quand le module de ventilation 4 est en position verticale, ce qui est fréquemment sa position optimale de travail.

Comme il est notamment et particulièrement bien visible à la figure 2, le ou chaque passage d'aspiration 11 peut présenter deux cloisons latérales 20 sensiblement verticales. Un toit 21 peut fermer le passage d'aspiration 11 sur la face supérieure du passage d'aspiration 11. Ce toit 21 est avantageusement pentu en présentant deux faces inclinées vers une cloison latérale 20 respective. Ceci permet l'écoulement de l'eau pouvant tomber du module mixte 3.

Le module de ventilation 4, comme d'ailleurs les autres modules de la tour d'aéro-réfrigération 1, peut être un parallélépipède rectangle présentant une longueur et une largeur. Dans ce cas, les passages d'aspiration et de refoulement s'étendent dans la largeur du module de ventilation 4. La ou les roues libres 10 correspondent chacune à une paire de passages d'aspiration 11 et de refoulement 12 et sont positionnées vers un bord longitudinal du module. Les passages d'aspiration 11 et de refoulement 12 traversent donc latéralement le module de ventilation 4, ceci en montant pour le ou les passages de refoulement 12.

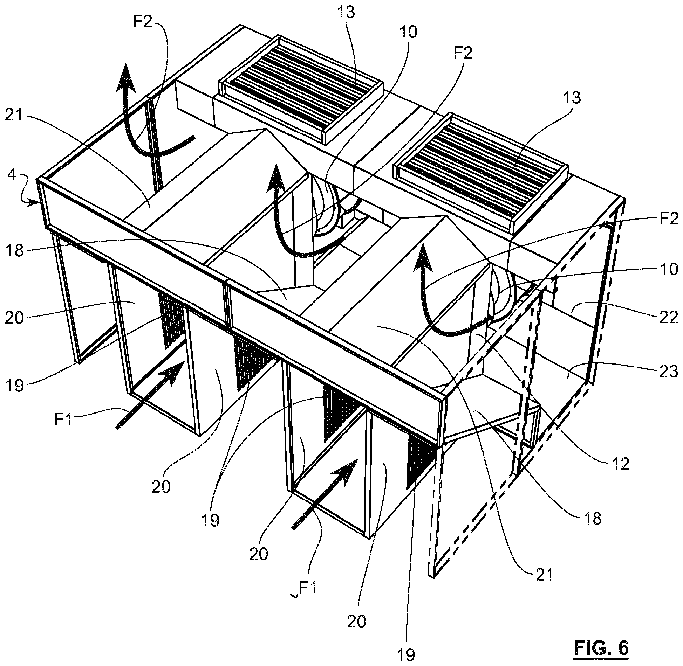

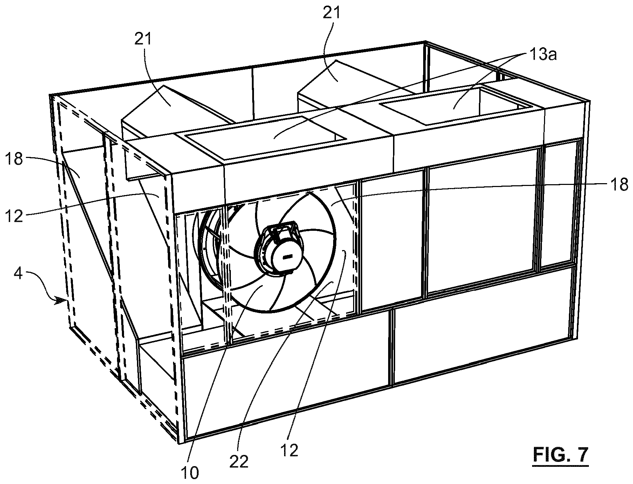

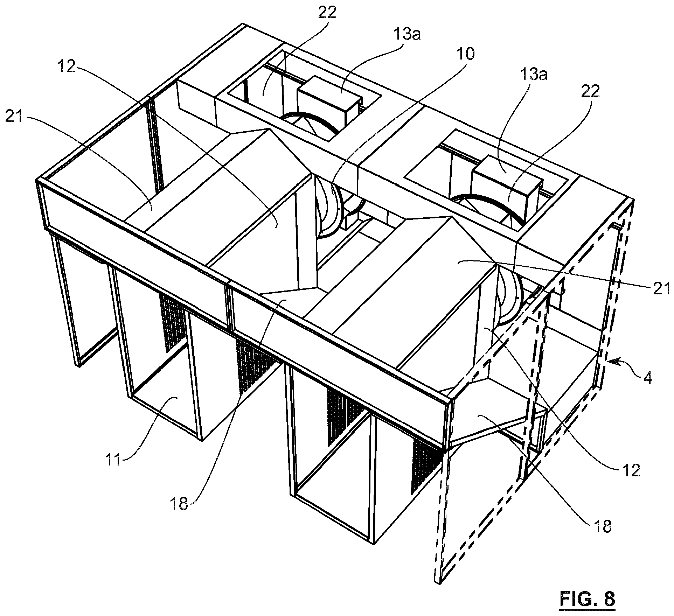

Comme il peut être vu notamment aux figures 2, 4, 6 à 8, la ou les roues libres peuvent être logées dans un compartiment 22 spécifique pour chaque roue libre 10. Deux compartiments 22 sont particulièrement bien visibles aux figures 7 et 8. A ces figures 7 et 8, les éléments d'obturation ont été ôtés et les ouvertures 13a que les éléments d'obturation peuvent ouvrir ou fermer sont visibles. Les faces verticales formant la face arrière du module de ventilation 4, dont l'une est retirée sur la figure 7 afin de voir la face arrière de la roue libre 10, peuvent avantageusement être mobiles. En effet ces dernières peuvent soient être retirées soient coulisser les unes par rapport aux autres afin de faciliter l'accès à la roue libre 10 en cas de manutention.

En se référant à toutes les figures, le ou les passages d'aspiration débouchent alors dans le compartiment 22 de leur roue libre 10 associé et le ou les passages de refoulement 12 partent du compartiment 22 de leur roue libre 10 associée. Le compartiment 22 de chaque roue peut présenter un plafond percé et muni d'au moins une ouverture 13a que peut fermer un élément d'obturation 13 pour au moins un passage en dérivation 6 dudit au moins un passage de refoulement 12.

Cet élément d'obturation 13 peut être un volet ou un ensemble de lames de volet ou aussi une tirette. Le ou les éléments d'obturation 13 du compartiment 22 peuvent être réglables en position pour ouvrir ou fermer le passage en dérivation 6. Ce passage en dérivation 6 est destiné à déboucher dans le module mixte 3 sans passer par ledit au moins un dispositif d'humidification 5 présent dans le module mixte 3 pour amener de l'air sec sans humidification au module sec 2.

Le ou les éléments d'obturation 13 peuvent être réglables dans des positions intermédiaires à une ouverture ou fermeture complète. Ainsi, le débit du flux d'air passant en dérivation dudit au moins un dispositif d'humidification 5 peut être régulé. Le réglage peut se faire par un servo-moteur.

Le module de ventilation 4 peut présenter un bassin 23 incliné collecteur d'eau disposé sous la roue libre 10. Ce bassin 23 peut se trouver en dessous d'un compartiment 22 entourant la roue libre 10. Le bassin 23 peut être incliné pour évacuer l'eau à l'extérieur du module de ventilation 4, ceci vers le dessous d'une paroi du compartiment 22.

L'invention concerne une tour d'aéro-réfrigération 1 comprenant un module mixte 3 et un module sec 2, le module sec 2 étant superposé au module mixte 3. La tour comprend un module de ventilation 4 tel que précédemment décrit, le module mixte 3 étant superposé au module de ventilation 4.

Le ou les passages de refoulement 12 d'air aboutissent dans une portion du module mixte 3 intégrant ledit au moins un dispositif d'humidification alors actif ou non actif et le ou les passages de dérivation pénètrent dans le module mixte 3 sans traverser ledit au moins un dispositif d'humidification 5 ceci pour déboucher directement dans le module sec 2.

Le module mixte 3 peut comprendre ainsi une première enceinte 7 présentant ledit au moins un dispositif d'humidification 5 de l'air le traversant et une deuxième enceinte 8 avec une circulation d'air sans humidification du module de ventilation 4 au module sec 2. La deuxième enceinte 8 peut se trouver au-dessus du compartiment 22 logeant la roue libre 10 avec un plafond percé d'au moins un élément d'obturation 13 quand un tel compartiment 22 est présent dans le module de ventilation 4. Les première et deuxième enceintes 7, 8 sont séparées par une paroi 9 étanche à l'air.

L'invention concerne aussi un procédé d'aspiration et de refoulement d'air dans un module de ventilation 4 d'une telle tour d'aéro-réfrigération 1, dans lequel l'aspiration et le refoulement de l'air se font d'un même côté de la roue libre 10 en étant séparés l'un de l'autre.

En général une telle roue libre 10 comprend une surface avant et une surface arrière séparées par une tranche. La surface avant sert à l'aspiration et la surface arrière sert au refoulement. Dans le cadre de l'invention, c'est la même surface avant qui sert à la fois à l'aspiration et au refoulement.

Avantageusement, la surface arrière ne servant pas à l'aspiration ou au refoulement est adossée contre l'intérieur d'une paroi du module de ventilation 4, ce qui procure un gain de place. Par exemple, quand la roue libre 10 définit un cylindre, l'aspiration et le refoulement se font sur une même face circulaire du cylindre, donc dans un même demi-espace relativement au plan de cette face.

La surface de la prise de l'air extérieur dans le passage d'aspiration 11 peut être augmentée lors de l'aspiration par une entrée d'air latérale 19. Ceci est fait en introduisant de l'air extérieur par la grille 19 latérale que porte le passage d'aspiration 11 en dessous d'une pente 18 d'un passage de refoulement 12 adjacent.

Dans le procédé d'aspiration et de refoulement d'air, de l'air refoulé par le module de ventilation 4 peut traverser le module mixte 3 sans traitement d'humidification pour pénétrer dans le module sec 2.

L'invention n'est pas limitée aux modes de réalisations précédemment décrits et s'étend à tous les modes de réalisation couverts par les revendications.

### REFERENCES

- 1.: Tour d'aéro-réfrigération
- 2.: Module sec
- 3.: Module mixte
- 4.: Module de ventilation
- 5.: Dispositif d'humidification
- 5a.: Passage d'humidification
- 6.: Passage en dérivation
- 7.: Première enceinte
- 8.: Deuxième enceinte
- 9.: Paroi
- 10.: roue libre
- 11.: Passage d'aspiration
- 12.: Passage de refoulement
- 13.: Elément d'obturation
- 13a.: Ouverture
- 14.: Batterie sèche
- 15.: Batterie arrosée
- 16.: Appareil de pulvérisation
- 17.: Séparateur de gouttes
- 18.: Pente
- 19.: Grille
- 20.: Cloison latérale
- 21.: Toit
- 22.: Compartiment
- 23.: Bassin
- F1.: Flux d'air aspiré
- F1a.: Flux d'air aspiré latéral
- F2.: Flux d'air refoulé
- F3.: Flux d'air dudit au moins un dispositif d'humidification
- F4.: Flux d'air en dérivation dudit au moins un dispositif d'humidification
- F5.: Flux d'air entre module mixte et module sec
- F6.: Premier flux d'air du passage en dérivation
- F7.: Deuxième flux d'air du passage en dérivation
- Fr.: Sens de rotation de la roue libre

## Revendications

1. Tour d'aéro-réfrigération (1) qui comprend un module mixte (3) comprenant un dispositif d'humidification d'air et un passage en dérivation et un module sec (2), le module sec (2) étant superposé au module mixte (3), la tour comprenant en outre un module de ventilation (4) le module mixte (3) étant superposé au module de ventilation (4), ledit module de ventilation (4) comprend une roue libre (10) d'aspiration d'air extérieur et de refoulement de l'air en partie supérieure du module de ventilation (4), dans lequel la roue libre (10) possède deux faces, une face dite arrière et une face dite avant, ladite roue libre (10) étant configurée pour aspirer l'air extérieur suivant la direction de l'axe de rotation de ladite roue libre (10) par la face avant et refouler l'air radialement à l'axe de rotation de ladite roue libre (10), le module de ventilation (4) étant traversé par au moins un passage d'aspiration (11) d'air extérieur et par au moins un passage de refoulement (12) d'air, ledit au moins un passage de refoulement (12) d'air étant configuré pour orienter le flux d'air vers le module mixte (3) à l'avant du plan formé par la face avant, à l'opposé de la face arrière.

2. Tour d'aéro-réfrigération (1) selon la revendication précédente dans laquelle au moins un passage de refoulement (12) est configuré pour orienter l'air dans une direction perpendiculaire la direction de l'axe de rotation de ladite roue libre (10).

3. Tour d'aéro-réfrigération (1) selon l'un quelconque des revendications précédentes, dans laquelle le module de ventilation (4) intègre en son intérieur la roue libre (10).

4. Tour d'aéro-réfrigération (1) selon l'une quelconque des deux revendications précédentes, dans laquelle le module de ventilation (4) est traversé par le au moins un passage d'aspiration (11) d'air extérieur et, et dans laquelle le au moins 1, passage de refoulement (12) d'air comprend au moins deux passages de refoulement (12) d'air traversant le module de ventilation (4) et symétriques de part et d'autre du passage d'aspiration (11), lesdits passages d'aspiration (11) et de refoulement (12) s'étendent sensiblement parallèles l'un à l'autre en étant cloisonnés l'un par rapport à l'autre.

5. Tour d'aéro-réfrigération (1) selon la revendication précédente, dans laquelle ledit au moins un passage d'aspiration (11) communique avec la roue libre (10), sur la face avant de ladite roue libre (10).

6. Tour d'aéro-réfrigération (1) selon l'une quelconque des deux revendications précédentes, configurée de sorte que la circulation d'air comprenne une composante de vitesse selon l'axe de rotation de la roue libre en sens inverse dans le passage de refoulement (12) par rapport à la circulation d'air dans le passage d'aspiration (11) d'air.

7. Tour d'aéro-réfrigération (1) selon la revendication précédente, dans laquelle il est prévu au moins trois passages de refoulement (12), deux passages de refoulement (12) intercalant un passage d'aspiration (11) d'air entre eux.

8. Tour d'aéro-réfrigération (1) selon l'une quelconque des revendications précédentes, dans laquelle la dimension du passage d'aspiration (11), suivant la direction de l'axe de rotation de la roue libre (10), est comprise entre 30% et 85 %, et de préférence entre 60% et 70%, plus particulièrement de 66%, de la dimension totale du module suivant cette direction, et de préférence dans laquelle ledit au moins un passage d'aspiration (11) présente au moins une grille (19) latérale disposée en dessous de la pente (18) dudit au moins un passage de refoulement (12).

9. Tour d'aéro-réfrigération (1) selon l'une quelconque des revendications précédentes, dans laquelle ledit au moins un passage d'aspiration (11) présente un fond s'étendant sensiblement horizontalement quand le module de ventilation (4) est en position verticale et ledit au moins un passage d'aspiration (11) présente deux cloisons latérales (20) sensiblement verticales, un toit (21) fermant le passage d'aspiration (11) sur la face supérieure du passage d'aspiration (11), et de préférence dans laquelle le toit (21) est pentu en présentant deux faces inclinées vers une cloison latérale (20) respective.

10. Tour d'aéro-réfrigération (1) selon l'une quelconque des revendications précédentes, dans laquelle le module de ventilation (4) est un parallélépipède rectangle présentant une longueur et une largeur, lesdits au moins un passage d'aspiration (11) et de refoulement s'étendant dans la largeur du module de ventilation (4), ladite au moins une roue libre (10) étant positionnée vers un bord longitudinal du module (4), et de préférence dans laquelle ladite au moins une roue libre (10) est logée dans un compartiment (22), ledit au moins un passage d'aspiration (11) débouchant dans le compartiment (22) et ledit au moins un passage de refoulement (12) partant du compartiment (22).

11. Tour d'aéro-réfrigération (1) selon la revendication précédente, dans laquelle le au moins un passage de refoulement (12) comprend au moins un passage en dérivation (6), et dans laquelle le compartiment (22) présente un plafond percé et muni d'au moins un élément d'obturation (13) pour le au moins un passage en dérivation (6) dudit au moins un passage de refoulement (12).

12. Tour d'aéro-réfrigération (1) selon la revendication précédente, dans laquelle ledit au moins un élément d'obturation (13) du compartiment (22) est mobile en position pour ouvrir ou fermer le passage en dérivation (6), et de préférence dans laquelle ledit au moins un élément d'obturation (13) est réglable dans des positions intermédiaires à une ouverture ou fermeture complète.

13. Tour d'aéro-réfrigération (1) selon l'une quelconque des revendications précédentes, laquelle présente un bassin (23) incliné collecteur d'eau disposé sous la roue libre (10), le bassin (23) étant incliné pour évacuer l'eau à l'extérieur du module de ventilation (4).

14. Tour d'aéro-réfrigération (1) selon l'une quelconque des revendications précédentes, dans laquelle le module mixte (3) comprend une première enceinte (7) présentant au moins un dispositif d'humidification de l'air le traversant et une deuxième enceinte (8) en dérivation reliant le module de ventilation (4) au module sec (2) avec une circulation d'air sans humidification, la deuxième enceinte (8) se trouvant au-dessus d'un compartiment (22) logeant la roue libre (10) avec un plafond percé d'au moins un élément d'obturation (13).

15. Procédé d'aspiration et de refoulement d'air dans un module de ventilation (4) d'une tour d'aéro-réfrigération (1) selon l'une quelconque des revendications précédentes, dans lequel l'aspiration et le refoulement de l'air se font d'un même côté de la roue libre (10) en étant séparés l'un de l'autre, et de préférence dans lequel de l'air refoulé par le module de ventilation (4) traverse le module mixte en passant par le dispositif d'humidification d'air et/ou le passage en dérivation sans traitement d'humidification pour pénétrer dans le module sec (2).

## Patentansprüche

1. Luft-Kühlungsturm (1), der ein Kombinationsmodul (3), umfassend eine Luftbefeuchtungsvorrichtung und eine Umleitungspassage, und ein Trockenmodul (2) umfasst, wobei das Trockenmodul (2) das Kombinationsmodul (3) überlagert, wobei der Turm weiter ein Belüftungsmodul (4) umfasst, wobei das Kombinationsmodul (3) das Belüftungsmodul (4) überlagert, wobei das Belüftungsmodul (4) ein Freilaufrad (10) für Außenluftansaugung und Abluft im oberen Teil des Belüftungsmoduls (4) umfasst, wobei das Freilaufrad (10) zwei Flächen aufweist, eine so genannte hintere Fläche und eine so genannte vordere Fläche, wobei das Freilaufrad (10) ausgestaltet ist, Außenluft gemäß der Richtung der Drehachse des Freilaufrads (10) über die vordere Fläche anzusaugen und Luft radial zu der Drehachse des Freilaufrads (10) zu fördern, wobei das Belüftungsmodul (4) von mindestens einer Außenluft-Ansaugpassage (11) und von mindestens einer Abluftpassage (12) durchsetzt wird, wobei die mindestens eine Abluftpassage (12) ausgestaltet ist, den Luftstrom zum Kombinationsmodul (3) vor der Ebene auszurichten, die von der vorderen Fläche gebildet wird, gegenüberliegend der hinteren Fläche.

2. Luft-Kühlungsturm (1) nach dem vorstehenden Anspruch, wobei mindestens eine Abluftpassage (12) ausgestaltet ist, die Luft in einer Richtung senkrecht zu der Richtung der Drehachse des Freilaufrads (10) auszurichten.

3. Luft-Kühlungsturm (1) nach einem der vorstehenden Ansprüche, wobei im Inneren des Belüftungsmoduls (4) das Freilaufrad (10) eingebaut ist.

4. Luft-Kühlungsturm (1) nach einem der zwei vorstehenden Ansprüche, wobei das Belüftungsmodul (4) von der mindestens einen Außenluft-Ansaugpassage (11) durchsetzt wird und wobei die mindestens 1 Abluftpassage (12) mindestens zwei Abluftpassagen (12) umfasst, die das Belüftungsmodul (4) durchsetzen und die beidseits der Ansaugpassage (11) symmetrisch verlaufen, wobei sich die Ansaug- (11) und Abluftpassagen (12) im Wesentlichen parallel zueinander erstrecken, indem sie durch Wände voneinander getrennt sind.

5. Luft-Kühlungsturm (1) nach dem vorstehenden Anspruch, wobei die mindestens eine Ansaugpassage (11) mit dem Freilaufrad (10) auf der vorderen Fläche des Freilaufrads (10) kommuniziert.

6. Luft-Kühlungsturm (1) nach einem der zwei vorstehenden Ansprüche, der so ausgestaltet ist, dass der Luftumlauf eine Geschwindigkeitskomponente gemäß der Drehachse des Freilaufrads in entgegengesetzter Richtung in der Abluftpassage (12) in Bezug auf den Luftumlauf in der Luftansaugpassage (11) umfasst.

7. Luft-Kühlungsturm (1) nach dem vorstehenden Anspruch, wobei mindestens drei Abluftpassagen (12) vorgesehen sind, wobei zwischen zwei Abluftpassagen (12) eine Luftansaugpassage (11) eingefügt ist.

8. Luft-Kühlungsturm (1) nach einem der vorstehenden Ansprüche, wobei die Dimension der Ansaugpassage (11), gemäß der Richtung der Drehachse des Freilaufrads (10), zwischen 30 % und 85 %, vorzugsweise zwischen 60 % und 70 %, besonders bevorzugt 66 % der Gesamtdimension des Moduls gemäß dieser Richtung beträgt, und wobei vorzugsweise die mindestens eine Ansaugpassage (11) mindestens ein seitliches Gitter (19) aufweist, das unter der Schräge (18) der mindestens einen Abluftpassage (12) angeordnet ist.

9. Luft-Kühlungsturm (1) nach einem der vorstehenden Ansprüche, wobei die mindestens eine Ansaugpassage (11) einen Boden aufweist, der sich im Wesentlichen horizontal erstreckt, wenn sich das Belüftungsmodul (4) in vertikaler Position befindet, und die mindestens eine Ansaugpassage (11) zwei im Wesentlichen vertikale Seitenwände (20) aufweist, wobei ein Dach (21), die Ansaugpassage (11) auf der oberen Fläche der Ansaugpassage (11) verschließt, und wobei vorzugsweise das Dach (21) schräg verläuft, indem es zwei zu einer jeweiligen Seitenwand (20) geneigte Flächen aufweist.

10. Luft-Kühlungsturm (1) nach einem der vorstehenden Ansprüche, wobei das Belüftungsmodul (4) ein Quader ist, der eine Länge und eine Breite aufweist, wobei sich die mindestens eine Ansaug- (11) und Abluftpassage in der Breite des Belüftungsmoduls (4) erstrecken, wobei das mindestens eine Freilaufrad (10) zu einem Längsrand des Moduls (4) hin positioniert ist und wobei vorzugsweise das mindestens eine Freilaufrad (10) in einem Fach (22) untergebracht ist, wobei die mindestens eine Ansaugpassage (11) in das Fach (22) mündet und die mindestens eine Abluftpassage (12) von dem Fach (22) ausgeht.

11. Luft-Kühlungsturm (1) nach dem vorstehenden Anspruch, wobei die mindestens eine Abluftpassage (12) mindestens eine Umleitungspassage (6) umfasst und wobei das Fach (22) eine durchbrochene Decke aufweist und mit mindestens einem Verschlusselement (13) für die mindestens eine Umleitungspassage (6) der mindestens einen Abluftpassage (12) versehen ist.

12. Luft-Kühlungsturm (1) nach dem vorstehenden Anspruch, wobei das mindestens eine Verschlusselement (13) des Fachs (22) in seiner Position beweglich ist, um die Umleitungspassage (6) zu öffnen oder zu schließen, und wobei vorzugsweise das mindestens eine Verschlusselement (13) in Positionen zwischen einer vollständigen Öffnung oder Schließung verstellt werden kann.

13. Luft-Kühlungsturm (1) nach einem der vorstehenden Ansprüche, wobei er ein geneigtes Wassersammelbecken (23) aufweist, das unter dem Freilaufrad (10) angeordnet ist, wobei das Becken (23) geneigt ist, um das Wasser in den Außenbereich des Belüftungsmoduls (4) abzuleiten.

14. Luft-Kühlungsturm (1) nach einem der vorstehenden Ansprüche, wobei das Kombinationsmodul (3) ein erstes Gehäuse (7) umfasst, das mindestens eine Luftbefeuchtungsvorrichtung aufweist, die es durchsetzt, und ein zweites Umleitungsgehäuse (8), welches das Belüftungsmodul (4) mit dem Trockenmodul (2) mit einem Luftumlauf ohne Befeuchtung verbindet, wobei sich das zweite Gehäuse (8) über einem Fach (22) befindet, in dem das Freilaufrad (10) untergebracht ist, mit einer von mindestens einem Verschlusselement (13) durchbrochenen Decke.

15. Verfahren zur Luftansaugung und Abluft in einem Belüftungsmodul (4) eines Luft-Kühlungsturms (1) nach einem der vorstehenden Ansprüche, wobei die Luftansaugung und Abluft auf einer gleichen Seite des Freilaufrads (10) erfolgen, indem sie voneinander getrennt sind, und wobei vorzugsweise die von dem Belüftungsmodul (4) geförderte Luft das Kombinationsmodul durchsetzt, indem sie durch die Luftbefeuchtungsvorrichtung und/oder die Umleitungspassage ohne Befeuchtungsbehandlung durchläuft, um in das Trockenmodul (2) einzudringen.

## Claims

1. Aero-refrigeration tower (1) which comprises a mixed module (3) comprising an air humidifying device and a bypass device and a dry module (2), the dry module (2) being stacked on the mixed module (3), the tower further comprising a ventilation module (4), the mixed module (3) being stacked on the ventilation module (4), said ventilation module (4) comprises a free wheel (10) for drawing in outside air and for outputting the air into the upper portion of the ventilation module (4), wherein the free wheel (10) has two faces, one so-called rear face and one so-called front face, said free wheel (10) being configured to draw in the outside air in the direction of the axis of rotation of said free wheel (10) via the front face and output the air radially with respect to the axis of rotation of said free wheel (10), the ventilation module (4) having, passing through it, at least one passage (11) for drawing in outside air and at least one passage (12) for outputting air, said at least one air output passage (12) being configured to direct the flow of air towards the mixed module (3) to the front of the plane formed by the front face, opposite the rear face.

2. Aero-refrigeration tower (1) according to the preceding claim wherein at least one output passage (12) is configured to direct the air in a perpendicular direction to the axis of rotation of said free wheel (10).

3. Aero-refrigeration tower (1) according to any one of the preceding claims, wherein the ventilation module (4) incorporates the free wheel (10) therein.

4. Aero-refrigeration tower (1) according to any one of the preceding claims, wherein the ventilation module (4) has, passing through it, the at least one passage (11) for drawing in outside air and, wherein the least one passage (12) for outputting air comprises at least two passages (12) for outputting air passing through the ventilation module (4) and symmetrical on either side of the drawing-in passage (11), said drawing-in (11) and output (12) passages extending substantially parallel with one another while being partitioned with respect to each other.

5. Aero-refrigeration tower (1) according to the preceding claim, wherein said at least one drawing-in passage (11) communicates with the free wheel (10), on the front face of said free wheel (10).

6. Aero-refrigeration tower (1) according to any one of the two preceding claims, configured such that the air flow comprises a velocity component along the axis of rotation of the free wheel in the opposite direction in the output passage (12) with respect to the air flow in the passage (11) for drawing in air.

7. Aero-refrigeration tower (1) according to the preceding claim, wherein at least three output passages (12) are provided, two output passages (12) inserting a passage (11) for drawing in air between them.

8. Aero-refrigeration tower (1) according to any one of the preceding claims, wherein the size of the drawing-in passage (11), along the direction of the axis of rotation of the free wheel (10), is between 30% and 85%, and preferably between 60% and 70%, more specifically 66%, of the total size of the module along this direction, and preferably wherein said at least one drawing-in passage (11) has at least one lateral grille (19) disposed below the slope (18) of said at least one output passage (12).

9. Aero-refrigeration tower (1) according to any one of the preceding claims, wherein said at least one drawing-in passage (11) has a bottom extending substantially horizontally when the ventilation module (4) is in the vertical position and said at least one drawing-in passage (11) has two substantially vertical lateral partitions (20), a roof (21) closing the drawing-in passage (11) on the top face of the drawing-in passage (11), and preferably wherein the roof (21) is sloped having two faces inclined towards a respective lateral partition (20) .

10. Aero-refrigeration tower (1) according to any one of the preceding claims, wherein the ventilation module (4) is a right-angled parallelepiped having a length and a width, said at least one drawing-in (11) and output passage extending in the width of the ventilation module (4), said at least one free wheel (10) being positioned towards a longitudinal edge of the module (4), and preferably wherein said at least one free wheel (10) is housed in a compartment (22), said at least one drawing-in passage (11) opening into the compartment (22) and said at least one output passage (12) starting from the compartment (22).

11. Aero-refrigeration tower (1) according to the preceding claim, wherein the at least one output passage (12) comprises at least one bypass passage (6), and wherein the compartment (22) has a perforated ceiling equipped with at least one sealing element (13) for the at least one bypass passage (6) of said at least one output passage (12).

12. Aero-refrigeration tower (1) according to the preceding claim, wherein said at least one sealing element (13) of the compartment (22) is movable in position to open or close the bypass passage (6), and preferably wherein said at least one sealing element (13) is adjustable in intermediate positions to complete opening or closing.

13. Aero-refrigeration tower (1) according to any one of the preceding claims, which has an inclined water collection tank (23) disposed under the free wheel (10), the tank (23) being inclined to evacuate water outside the ventilation module (4).

14. Aero-refrigeration tower (1) according to any one of the preceding claims, wherein the mixed module (3) comprises a first enclosure (7) having at least one air humidifying device passing through it and a second bypass enclosure (8) connecting the ventilation module (4) to the dry module (2) with an air flow without humidification, the second enclosure (8) being located above a compartment (22) housing the free wheel (10) with a ceiling perforated with at least one sealing element (13).

15. Method for drawing in and outputting air in a ventilation module (4) of an aero-refrigeration tower (1) according to any one of the preceding claims, wherein the air is drawn in and output on the same side of the free wheel (10) while being separated from one another, and preferably wherein air output by the ventilation module (4) passes through the mixed module via the air humidifying device and/or the bypass passage without humidifying treatment to enter the dry module (2).
